# EUROPÄISCHE PATENTSCHRIFT

(11) **EP 0 873 949 B1**
(45) Veröffentlichungstag und Bekanntmachung des Hinweises auf die Patenterteilung: **29.01.2003**
(21) Anmeldenummer: 98106021.3
(22) Anmeldetag: 02.04.1998
(51) Int. Cl.: B65G 15/48, F16G 1/20, B29C 55/20, B29C 55/16

(54) **Führungsschiene für Spannkluppen in Spannmaschinen, insbesondere in Folienreckmaschinen**
Guiding rail for a tentering clip in a tenter frame, in particular in a film stretching apparatus
Rail de guidage pour des pinces de serrage dans des rames d'étirage, en particulier dans une machine d'étirage des films

(30) Priorität: 21.04.1997 DE 29707124 U
(43) Veröffentlichungstag der Anmeldung: 28.10.1998
(73) Patentinhaber: LINDAUER DORNIER GESELLSCHAFT M.B.H, 88129 Lindau (DE)
(72) Erfinder: Rutz, Andreas, Dipl.-Ing., 88131 Lindau (DE)

(56) Entgegenhaltungen:
- EP-A- 0 862 985
- DE-A- 2 330 251
- DE-A- 19 515 036

## Beschreibung

Die Erfindung betrifft eine Führungsschiene in Spannmaschinen mit rollengeführten Spannkluppen, insbesondere in Folienreckmaschinen, nach dem Oberbegriff des Anspruchs 1.

Aus der DE-PS 25 58 765 ist eine Folienreckmaschine zum kontinuierlichen Behandeln eines bahnförmiges Gutes bekannt, mit jeweils einer an den beiden Bahnkanten vorhandenen Führungsschiene für Spannkluppen. Die Führungsschiene besteht aus einzelnen Federstahlbändern, die hochkant zum Behandlungsgut und zu dessen Ebene verlaufen und der Führung der Spannkluppen dienen.
Die Spannkluppen besitzen Paare von Führungsrollen zur Horizontalführung und Stützrollen zur Vertikalführung.

Aufgrund von Fertigungstoleranzen an den Spannkluppen, wie z.B. abweichende Achsabstandsmaße zwischen den vertikal ausgerichteten Führungsrollenachsen und aufgrund von Fertigungstoleranzen in der Dicke der gewalzten Federstahlbänder, kann sich zwischen den Führungsrollenpaaren und der Führungsschiene ein Spiel einstellen.
Dieses Spiel hat zur Folge, daß die Führungsrollen der Spannkluppen, mit Ausnahme der oberen Stützrollen, nicht immer an der Führungsschiene anliegen und sich damit nicht konstant drehen.
Je nach Belastung und Führung der Spannkluppen während des Folienreckprozesses kommen entweder erste Führungsrollen oder zweite Führungsrollen eines Führungsrollenpaares mit der Führungsschiene abwechselnd in Berührungskontakt. Das bedeutet, daß nach einem Abheben der Führungsrollen von der Führungsschiene und einem erneuten Anlegen der Führungsrollen an die Führungsschiene, diese Führungsrollen an ihrem Umfang innerhalb kurzer Zeit auf die Arbeitsgeschwindigkeit der Spannkluppenkette bzw. auf die Umfangsgeschwindigkeit der sich entsprechend der Arbeitsgeschwindigkeit drehenden Führungsrollen beschleunigt werden müssen.

Die Belastungswechsel der Kluppenkette und die damit einhergehenden ständigen Beschleunigungsvorgänge der Führungsrollen haben nachteilige Auswirkungen auf die Führungsschiene und auf die Führungsrollen selbst.
Dies sind im ungünstigen Fall Gleitvorgänge zwischen dem Führungsrollenaußenring und dem betreffenden äußeren Führungsband der Führungsschiene. Abhängig von der inneren Reibung der Führungsrollenlager und des Dichtungssystems der Führungsrollenlager können sich Beschädigungen durch Abschleifen des Führungsrollenaußenringes ergeben. Dies führt zu einer mechanischen Beschädigung und zum Verschleiß der äußeren Federbänder bzw. zum Abschleifen des Führungsrollenaußenringes der Führungsrollen. Bevor es zu diesen mechanischen Beschädigungen kommt, wird das Führungsrollenlager durch die Reibungswärme, die bei den Beschleunigungsvorgängen und bei dem damit verbundenen Gleiten entsteht, zusätzlich zu den relativ hohen Temperaturen im geheizten Bereich der Reckmaschine erwärmt.

Aus der DE 195 15 036 A1 sind Führungsschienen für Spannkluppen einer Reckanlage bekannt, die auf eine gegenüber dem Stand der Technik verbesserte Spannkluppenführung und im Zusammenhang damit auf die Erhöhung der Funktionstüchtigkeit und der Lebensdauer der Reckanlage abstellt.
Es wird vorgeschlagen, das Abstandsmaß zwischen den horizontalen und vertikalen Führungsflächen der Führungsschiene begrenzt veränderlich zu halten. Dazu ist zumindest eine Vorspann- und/oder Dämpfungseinrichtung vorgesehen, worüber zumindest eine der vorgenannten Führungsflächen lageveränderlich gehalten und/oder gedämpft abgestützt ist. Unabhängig von der Ausbildung der Führungsschiene, d.h. unabhängig davon, ob die Führungsschiene aus einem kompakten, einstückigen Teil oder aus einer Kombination unterschiedlich ausgebildeter Führungsschienenelemente besteht, sind umfassende Vorkehrungen zu treffen, um die entsprechenden Einrichtungen in die Führungsschiene zu integrieren.
Diese Vorkehrungen erfordern einen relativ hohen Fertigungs- und Montageaufwand.

Aufgabe der Erfindung ist es, eine Führungsschiene mit wenigstens einem Federstahlband zu schaffen, das einen permanenten Kontakt aller Seitenführungsrollen einer Spannkluppe mit der Führungsschiene gewährleistet.

Erfindungsgemäß wird die Aufgabe durch die Merkmale des Anspruchs 1 gelöst.
Gemäß der Erfindung wird im Seitenführungsbereich der Führungssschiene eine federelastische Wirkung auf die Seitenführungsrollen der Spannkluppe dadurch erzielt, daß die Dicke wenigstens eines äußeren Federstahlbandes, ausgehend von einem parallel zu einer ersten Breitseite liegenden mittleren Abschnitt einer zweiten Breitseite, zu dem oberen und unteren Ende (Breite) des Stahlbandes hin abnimmt.
Die Abnahme der Dicke kann dabei geometrisch unterschiedlich verlaufen.
Vorteilhafterweise jedoch nimmt die Dicke bis zu einer verbleibenden Randdicke kontinuierlich ab.
Der mittlere Abschnitt besitzt vorzugsweise eine Breite, die etwa der Breite eines die Führungsschiene aufnehmenden Stützelementes entspricht, mit dem die Führungsschiene mittels eines Spannmittels verspannt ist.

Von Vorteil ist, wenn wenigstens eines der äußeren Stahlbänder der erfindungsgemäß ausgeführten Führungsschiene durch Kaltwalzen hergestellt wird. Dadurch wird eine präzise Ausbildung der Profilkontur der einen Seitenfläche des Stahlbandes ermöglicht.
Eine spanabhebende Bearbeitung der gewünschten Profilkontur wird damit vermieden.
Die Profilkontur, die am jeweiligen Ende des mittleren Abschnittes ansetzt und zum jeweiligen Ende der Breite des Stahlbandes hin ausläuft, kann dabei unterschiedlicher geometrischer Gestalt sein. Wichtig ist, daß wenigstens eine Führungsschiene in Bezug auf die Seitenführungen der Spannkluppen spielausgleichend wirkt.

Mit der Erfindung wird eine längere Lebensdauer der Führungsrollen der Spannkluppen und eine längere Lebensdauer zumindest der mit den Führungsrollen in Kontakt stehenden Federstahlbänder der Führungsschiene erreicht.

Die Erfindung soll nachstehend anhand eines Ausführungsbeispiels näher erläutert werden.

Es zeigen:
- Figur 1: ein Federstahlband der erfindungsgemäß ausgebildeten Führungsschiene;
- Figur 2: ein weiteres Federstahlband der erfindungsgemäß ausgebildeten Führungsschiene;
- Figur 3: schematisch eine mit einem Stützelement verbundene, erfindungsgemäß ausgebildete Führungsschiene mit äußeren Federstahlbändern;
- Figur 4: schematisch das Rollteil einer Spannkluppe in Verbindung mit der erfindungsgemäß ausgebildeten Führungsschiene.

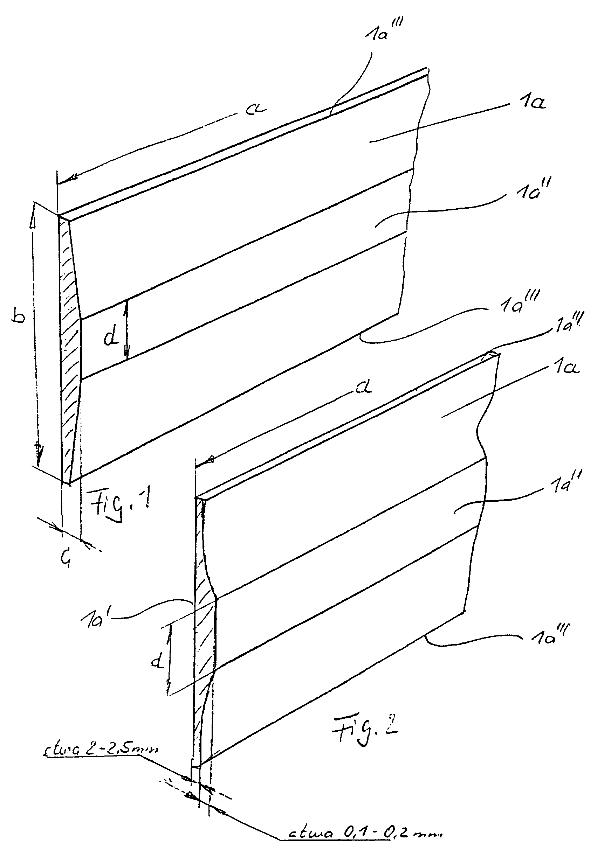

In den Figuren 1 und 2 ist jeweils ein äußeres Federstahlband 1a einer aus mehreren Federstahlbändern 1a,1b,1c bestehenden Führungsschiene 1 für Spannmaschinen dargestellt. Das in den Figuren 1 und 2 erkennbare Querschnittsprofil des Federstahlbandes 1a ist eines von möglichen geometrischen Ausbildungen.
Wichtig ist, daß die Dicke c wenigstens eines äußeren Federstahlbandes 1a der Führungsschiene 1, ausgehend von einem parallel zur Breitseite 1a' vorhandenen mittleren, planebenen Abschnitt 1a'', der eine Breite d aufweist, zu den Enden 1a''' hin abnimmt und zwar nur auf der dem Rollenführungsbereich des Bandes 1a gegenüberliegenden Seite. Die abnehmende Dicke c verleiht den Endbereichen der Bänder 1a eine gewisse Elastizität.
Die Dicke c des mittleren Abschnittes 1a" beträgt z.B. etwa 2 mm bis 2,5 mm. Zu den Enden 1a''' hin nimmt die Dicke c derart ab, daß diese etwa 0,1 bis 0,2 mm geringer ist als im Abschnitt 1a".

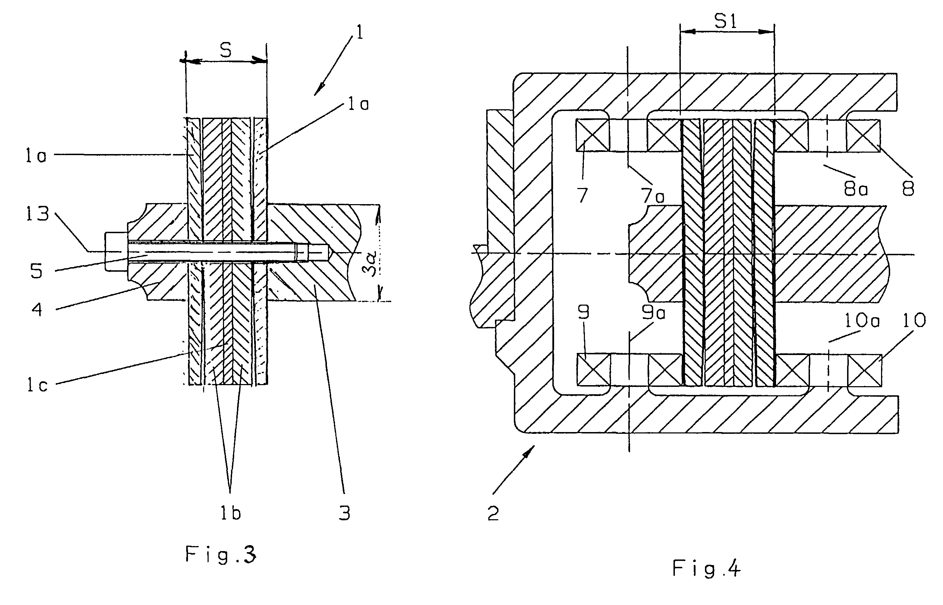

In Figur 3 besteht die Führungsschiene 1 aus insgesamt 5 Federstahlbändern 1a, 1b, 1c, 1b, 1a, die zwischen einem Stützelement 3, das maschinenfest in der Reckmaschine angeordnet ist, und einem Spannteil 4 mittels eines Verbindungselementes 5 verspannt sind.
Die äußeren Federstahlbänder 1a sind hier erfindungsgemäß ausgebildet. Die Federstahlbänder 1b und 1c besitzen parallel zueinander verlaufende Seitenflächen, die im montierten Zustand der Führungsschiene 1 einander berühren.
Aufgrund der Dickendifferenz zwischen dem mittleren Abschnitt 1a'' und den Enden 1a''' der äußeren Federstahlbändern 1a entsteht zwischen den sich im Spannbereich kontaktierenen Flächen der Bänder 1b und 1a nach außen hin ein Spalt, der federelastisch gegenüber den Führungsrollen des Rollteiles 2 der Spannkluppe ist.

In Figur 4 ist auf die Führungsschiene 1 gemäß Figur 3 das Rollteil 2 einer im einzelnen nicht dargestellten Spannkluppe aufgefädelt.
Das Abstandsmaß S1 zwischen den Rollflächen der zwei einander benachbarten Führungsrollen 7,8 bzw. 9,10 ist dabei um den Differenzbetrag geringer als das Abstandsmaß S in Figur 3.
Damit wird ein permanentes Anlegen der Führungsrollen 7,8,9 und 10 an der Führungsschiene 1 gewährleistet und es werden die aus dem Stand der Technik bekannten Nachteile vermieden.

## Patentansprüche

1. Führungsschiene für Spannkluppen in Spannmaschinen, insbesondere Folienreckmaschinen, umfassend äußere und innere Federstahlbänder (1a,1b,1c), die über ihre Länge (a) eine gleichbleibende Breite (b) und eine bestimmte Dicke (c) aufweisen, und die zusammen quer zu ihrer Längserstreckung von Stützelementen (3) in der Folienreckmaschine getragen und über Spannmittel (4,5) mit den Stützelementen (3) verbunden sind, **dadurch gekennzeichnet, daß** die Dicke (c) wenigstens eines der äußeren Federstahlbänder (1a), ausgehend von einem parallel zur Breitseite (1a') verlaufenden mittleren, planebenen Abschnitts (1a" zu den Enden (1a"') hin abnimmt.

2. Führungsschiene nach Anspruch 1, **dadurch gekennzeichnet, dass** die Dicke (c) zu den Enden (1a"') hin kontinuierlich abnimmt.

3. Führungsschiene nach Anspruch 1, **dadurch gekennzeichnet, daß** der mittlere Abschnitt (1a") eine Breite (d) aufweist, die etwa der Breite (3a) eines die Führungsschiene (1) aufnehmenden Stützelementes (3) entspricht.

4. Führungsschiene nach den Ansprüche 1 bis 3, **dadurch gekennzeichnet, daß** das Federstahlband (1a) kaltgewalzt ist.

## Claims

1. Guiding rail for a tentering clip in a tenter frame, in particular in a film stretching apparatus, comprising outer and inner spring steel strips (1a, 1b 1c) of a constant width (b) and a specific thickness (c) along their length (a), and which are supported together in the film stretching apparatus, transversely to their longitudinal extension, by means of supporting elements (3) and are joined to the supporting elements (3) by tentering means (4, 5), **characterised in that** the thickness (c) of at least one of the outer steel spring strips (1a) decreases, starting from a middle planar portion (1a") extending parallel with the width side (1a'), towards the ends (1a"').

2. Guiding rail as claimed in claim 1, **characterised in that** the thickness (c) decreases continuously towards the ends (1a''').

3. Guiding rail as claimed in claim 1, **characterised in that** the width (d) of the middle portion (1a") more or less corresponds to the width (3a) of a supporting element (3) receiving the guiding rail (1).

4. Guiding rail as claimed in claims 1 to 3, **characterised in that** the spring steel strip (1a) is cold-rolled.

## Revendications

1. Rail de guidage pour crampons de serrage dans des machines de serrage, en particulier des machines d'étirage de feuilles, comprenant des bandes d'acier souple extérieures et intérieures (1a, 1b, 1c), qui ont sur leur longueur (a) une largeur constante (b) et une épaisseur déterminée (c) et qui sont portées ensemble dans la machine d'étirage de feuilles dans le sens transversal par rapport à leur extension longitudinale par des éléments de soutien (3) et sont reliées avec les éléments de soutien (3) par un moyen de serrage (4, 5), **caractérisé en ce qu'**en partant d'une section plane centrale (1a") s'étendant parallèlement au côté large (1a') l'épaisseur (c) d'au moins une des bandes d'acier souple extérieures (1a) diminue vers les extrémités (1a''').

2. Rail de guidage selon la revendication 1, **caractérisé en ce que** l'épaisseur (c) diminue de façon continue vers les extrémités (1a"').

3. Rail de guidage selon la revendication 1, **caractérisé en ce que** la section centrale (1a") a une largeur (d) qui correspond approximativement à la largeur (3a) d'un élément de maintien (3) recevant le rail de guidage.

4. Rail de guidage selon les revendications 1 à 3, **caractérisé en ce que** la bande d'acier souple (1a) est laminée à froid.
